(19) Europäisches Patentamt
European Patent Office
Office européen des brevets

(11) **EP 4 361 662 B1**

(12) **FASCICULE DE BREVET EUROPEEN**

(45) Date de publication et mention
de la délivrance du brevet:
**20.08.2025 Bulletin 2025/34**

(21) Numéro de dépôt: **23204540.1**

(22) Date de dépôt: **19.10.2023**

(51) Classification Internationale des Brevets (IPC):
**G01S 5/02** *(2010.01)* **G01S 19/20** *(2010.01)*

(52) Classification Coopérative des Brevets (CPC):
**G01S 5/0244; G04G 7/00; G04R 20/00;**
G01S 5/0289; G01S 5/145

(54) **PROCÉDÉ DE RADIODIFFUSION DE TEMPS PRÉCIS INTÈGRE**

INTEGRIERTES PRÄZISIONSZEITRUNDFUNKVERFAHREN

INTEGRATED PRECISE TIME BROADCASTING METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **27.10.2022 FR 2211178**

(43) Date de publication de la demande:
**01.05.2024 Bulletin 2024/18**

(73) Titulaire: **THALES**
**92190 Meudon (FR)**

(72) Inventeur: **HEURGIER, Dominique**
**92622 Gennevilliers cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**FR-A1- 2 881 008 FR-A1- 3 114 164**

• **ALEXANDER ENS ET AL: "Unsynchronized ultrasound system for TDOA localization", 2014 INTERNATIONAL CONFERENCE ON INDOOR POSITIONING AND INDOOR NAVIGATION (IPIN), 1 October 2014 (2014-10-01), pages 601 - 610, XP055217486, ISBN: 978-1-46-738054-6, DOI: 10.1109/IPIN.2014.7275533**
• **NAVRATIL VACLAV ET AL: "Concurrent Bidirectional TDoA Positioning in UWB Network With Free-Running Clocks", IEEE TRANSACTIONS ON AEROSPACE AND ELECTRONIC SYSTEMS, IEEE SERVICE CENTER, PISCATAWAY, NJ, US, vol. 58, no. 5, 22 March 2022 (2022-03-22), pages 4434 - 4450, XP011923267, ISSN: 0018-9251, [retrieved on 20220323], DOI: 10.1109/TAES.2022.3161895**

**Description**

**Domaine technique** :

L'invention se situe dans le domaine de la radiodiffusion d'une information de temps par voie radiofréquence depuis des balises terrestres, de façon à ce qu'un récepteur mobile ou semi-mobile puisse disposer d'un service temps, c'est-à-dire d'une heure synchronisée avec l'heure du réseau de balises. L'invention porte en particulier sur un procédé permettant de garantir la précision du service temps diffusé par le réseau de balises en présence de défaillance accidentelle (telle qu'un défaillance d'horloge d'une balise, une défaillance de synchronisation d'une balise ou une erreur de positionnement d'une balise) ou de malveillance (telle que le déplacement d'une balise réalisé de manière à perturber la mesure), ainsi que sur la levée d'alerte dès lors que l'intégrité du service temps ne répond plus à des normes établies.

**Technique antérieure :**

Le partage, entre plusieurs équipements, d'une référence de temps commune de bonne précision peut s'avérer indispensable. C'est le cas de manière générale dès lors qu'il est nécessaire de synchroniser des équipements, comme par exemple pour les transmissions radio multiplexées en temps (TDMA, sigle anglais pour *Time Division Multiple Access,* ou accès multiple à répartition dans le temps) ou étalées en code (CDMA, sigle anglais pour *Code Division Multiple Access,* ou accès multiple à répartition en code), ou utilisant l'étalement par saut de fréquence (FHSS, sigle anglais pour *Frequency Hopping Spread Spectrum*). La précision recherchée dépend de l'application visée, mais un ordre de grandeur standard de la précision recherché est la microseconde ou moins.

En règle générale, les équipements cherchant à déterminer un temps précis font appel au positionnement GNSS (sigle anglais pour *Global Navigation Satellite Systems,* ou système global de navigation par satellite), qui permet de déterminer précisément une position et une heure en mesurant une pseudo-distance avec au moins quatre satellites, les positions des satellites étant connues. Cependant, dans certains cas, la diffusion d'une heure par un réseau de satellites n'est pas possible. C'est le cas par exemple lorsque les conditions de visibilité des satellites sont mauvaises ou perturbées, que l'on ne dispose pas de moyens permettant de recevoir des signaux des satellites, ou lorsque l'on ne souhaite pas s'appuyer sur un réseau GNSS.

Il est aussi possible de diffuser une information de temps précise par des voies filaires, mais cette solution n'est pas applicable dès lors que les équipements sont mobiles ou semi-mobiles (c'est-à-dire fixes mais déplaçables).

Une autre solution consiste à transmettre un marquant horaire par trois balises terrestres de transfert de temps ou plus sur une voie radio. Dès lors que les balises sont précisément synchronisées (par des voies filaires ou des horloges de haute précision) et que leurs positions sont transmises ou connues de l'équipement cherchant à déterminer l'heure du réseau, il est possible de calculer une distance avec chaque balise et d'en déduire la position de l'équipement. Cette détermination se fait de manière comparable à un positionnement GNSS, par l'estimation de pseudo-distances avec chacune des balises, obtenues par mesure du temps de propagation, puis par multilatération à partir des pseudo-distances. Le document FR3114164 divulgue un procédé comprenant la détermination d'un vecteur d'état estimé à partir d'un vecteur de mesures comprenant des mesures de position des amers, des mesures de direction des amers et des mesures de distance et la de détermination d'une variable de test, d'une valeur de décentralisation de la loi de distribution de ladite variable, d'un biais minimum détectable à partir de la valeur de décentralisation de la variable de test et d'un vecteur caractéristique associé à ce type de défaillance.

Un des problèmes techniques objet de l'invention consiste à procurer un service temps précis, et à garantir son intégrité en détectant les défaillances accidentelles des balises (telles que la défaillance de l'horloge d'une balise ou ses problèmes de synchronisation avec les autres balises ou de localisation) ou les malveillances (tel que le déplacement d'une balise de transfert de temps).

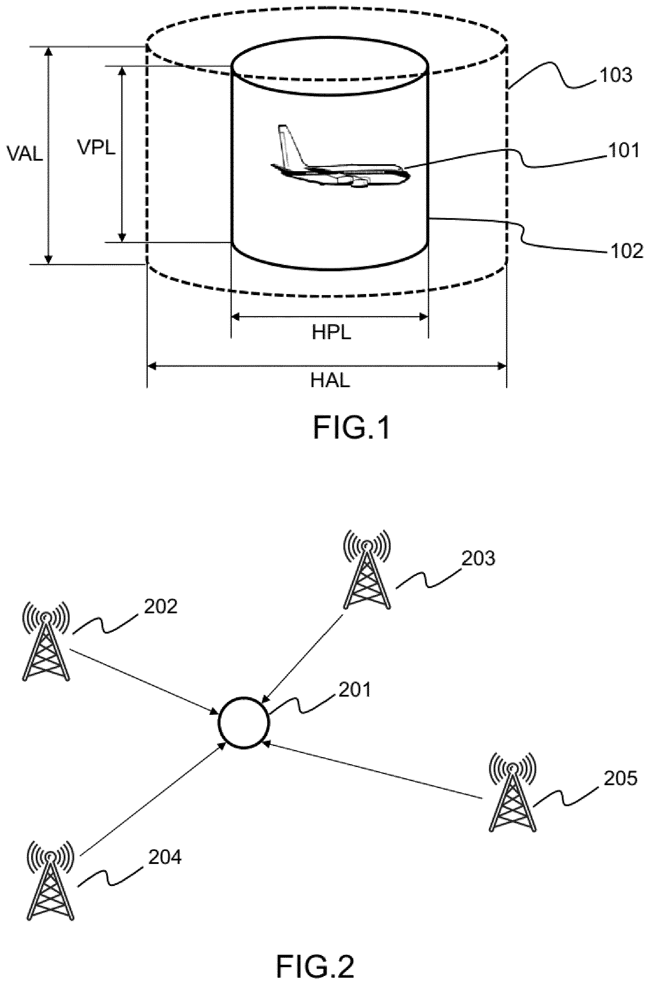

Le contrôle d'intégrité est une fonction très répandue dans le domaine du positionnement en navigation aérienne, avec des algorithmes de type RAIM (sigle anglais pour *Receiver Autonomous Integrity Monitoring,* ou surveillance autonome de l'intégrité du récepteur). Ces algorithmes s'appliquent à garantir le service position pour la navigation sur base GNSS (sigle anglais pour *Global Navigation Satellite System,* ou système de navigation global par satellite) face à des défaillances potentielles des horloges des satellites. Leur objectif est de fournir, dans un délai imposé, des alertes de disfonctionnement lorsque le système de positionnement ne satisfait plus aux exigences de précision de navigation, pour une probabilité de non détection et une probabilité de fausse alarme données. Ils permettent de déterminer une zone de protection 102 (aussi appelée zone d'intégrité) autour de l'aéronef, représentée sur la figure 1, définie par une protection HPL (*Horizontal Protection Level*) selon l'axe horizontal et une protection VPL (*Vertical Protection Level)* selon l'axe vertical. Au sein de la zone de protection, la position du porteur 101 est garantie avec une probabilité de non détection d'erreur et de fausse alarme donnée. Tant que le seuil d'alerte n'est pas franchi et que la zone de protection 102 est inférieure à une zone d'alerte (ou zone de confiance) 103, définie par une zone d'alerte horizontale HAL (*Horizontal Alert Limit*) selon l'axe horizontal et une zone d'alerte verticale VAL (*Vertical Alert Limit)* selon l'axe vertical, l'intégrité de la solution de positionnement est garantie. Lorsque le seuil d'alerte est franchi ou lorsque la zone de protection dépasse la zone d'alerte, l'intégrité de la mesure de positionnement n'est plus garantie dans les conditions spécifiées. Le RAIM GNSS s'appuie pour cela sur une analyse des pseudo-distances calculées auprès d'au moins 5 satellites pour une détection d'erreur, et d'au moins 6 satellites pour être en mesure de déterminer et rejeter le satellite défectueux.

Les procédés de contrôle d'intégrité selon l'état de l'art, adaptés pour les systèmes de positionnement par satellite, s'appliquent au service de positionnement mais pas au service temps, ni à des défaillances reposant sur des biais de position des balises de transfert de temps (par exemple le déplacement malveillant d'une balise) en complément de défaillances reposant sur des biais d'horloge des balises de transfert de temps (suite par exemple à un dysfonctionnement ou à un leurrage).

Un but de l'invention est donc de décrire un procédé de radiodiffusion de temps et de mesure d'une intégrité du temps radiodiffusé, spécifiquement adapté au transfert intègre d'une heure par un réseau de balises, et pour lequel une zone de protection (sous forme d'un intervalle sur le décalage temporel estimé de l'horloge du récepteur) est définie par rapport à un éventuel de biais de position ou d'horloge d'une ou plusieurs balises de transfert de temps.

**Résumé de l'invention** :

A cet effet, la présente invention décrit un procédé de radiodiffusion de temps et de mesure d'une intégrité du temps radiodiffusé pour un récepteur en lien radiofréquence avec au moins quatre balises terrestres de transfert de temps synchronisées diffusant chacune un message horaire comprenant un marquant horaire et une heure d'émission. Le procédé décrit comprend :

- une première étape de calcul d'un instant d'arrivée des messages horaires transmis par lesdites balises terrestres de transfert de temps, les positions des balises terrestres de transfert de temps étant connues par le récepteur ou transmises au récepteur, et de détermination d'une mesure de pseudo distance associée à chaque balise terrestre de transfert de temps,

- une deuxième étape de mise en œuvre d'un algorithme de résolution optimisant un critère de maximum de vraisemblance utilisant les pseudo-distances calculées à la première étape et résolvant conjointement les positions des balises terrestres de transfert de temps, la position du récepteur et le décalage temporel du récepteur,

- une troisième étape de calcul d'une variable de test T égale à la somme du carré des résidus des positions du récepteur et des balises terrestres de transfert de temps, pondérée par des variances des positions du récepteur et des balises terrestres de transfert de temps,

- une quatrième étape de détermination d'un seuil d'alerte sur la variable de test T en fonction d'une probabilité de fausse alarme Pfa donnée, et lorsque la variable de test T est supérieur ou égale au seuil d'alerte, de levée d'une alerte de perte d'intégrité, et sinon

- une cinquième étape de détermination d'un paramètre de non centralité $\lambda$ de la variable de test T pour la probabilité de fausse alarme Pfa et pour une probabilité de détection Pd donnée,

- une sixième étape de détermination d'un biais minimum d'horloge détectable pour chaque balise terrestre de transfert de temps, à partir de la variable de test T et du paramètre de non centralité $\lambda$,

- une septième étape de détermination d'un biais minimum de position détectable pour chaque balise terrestre de transfert de temps, à partir de la variable de test T et du paramètre de non centralité $\lambda$,

- une huitième étape de détermination d'une zone de protection de l'information de décalage temporel du récepteur calculée lors de la deuxième étape, à partir des biais minimum détectables calculés lors de la sixième étape et de la septième étape du procédé, et de levée d'une alerte de perte d'intégrité lorsque ladite zone de protection est supérieure ou égale à une zone d'alerte.

Selon différents modes de réalisation, l'algorithme utilisant un critère de maximum de vraisemblance mis en œuvre lors de la deuxième étape peut être un algorithme de Gauss-Newton ou un algorithme de Levenberg-Marquardt.

Selon un mode de réalisation, la deuxième étape du procédé de radiodiffusion de temps et de mesure d'une intégrité du temps radiodiffusé s'invention comprend :

- la construction d'un vecteur d'état X comprenant une position estimée du récepteur, un décalage temporel estimé du récepteur, et des positions estimées des balises terrestres de transfert de temps,

- la construction d'un vecteur d'observation *y* comprenant les positions connues ou transmises des balises terrestres de transfert de temps et les pseudo-distances calculées lors de la première étape, la construction d'un vecteur d'observation linéarisé Y comprenant un écart entre les positions connues ou transmises desdites au moins trois balises terrestres de transfert de temps et leurs positions estimées, et un écart entre les pseudo-distances calculées lors de la première étape et des pseudo-distances construites à partir des valeurs du vecteur d'état *X*,

- la construction d'une matrice Jacobienne *H* à partir du vecteur d'état *X* et du vecteur d'observation *y* tel que $H = \frac{\partial y}{\partial X}$, et la résolution itérative du système, en calculant $\hat{X} = H^*Y$ où $H^*$ est la pseudo-inverse à gauche de la matrice Jacobienne *H*.

Selon un mode de réalisation, la variable de test T calculée lors de la troisième étape du procédé selon l'invention suit une loi mathématique du $\chi^2$.

Selon un mode de réalisation du procédé de radiodiffusion de temps et de mesure d'une intégrité du temps radiodiffusé selon l'invention, la huitième étape de détermination d'une zone de protection de l'information de décalage temporel comprend le calcul d'une erreur d'estimation maximum non détectable avec une probabilité supérieure ou égale à la probabilité de détection Pd d'un biais d'horloge ou de position d'une ou plusieurs des balises terrestres de transfert de temps.

Selon un mode de réalisation du procédé selon l'invention dans lequel le récepteur est en lien radiofréquence avec N balises terrestres de transfert de temps synchronisées diffusant chacune un message horaire comprenant un marquant horaire et une heure d'émission, avec N supérieur ou égal à 5, lorsqu'une alerte de perte d'intégrité est levée lors de la quatrième étape ou lors de la huitième étape, le procédé selon l'invention est remis en œuvre successivement sur chaque sous ensemble de balises terrestres de transfert de temps de taille *N - M,* avec $1 \leq M \leq N$ - 4, de manière à déterminer un sous-ensemble de balises terrestres de transfert de temps ne levant pas d'alerte d'intégrité afin d'identifier la ou les stations de transfert de temps affectées par un biais d'horloge ou un biais de position.

L'invention porte également sur un équipement de radiocommunications en lien radiofréquence avec au moins quatre balises terrestres de transfert de temps synchronisées diffusant chacune un message horaire comprenant un marquant horaire et une heure d'émission. Cet équipement de radiocommunications comprend une chaîne radio configurée pour recevoir et interpréter le message horaire transmis par les balises. Il comprend en outre des moyens de calculs configurés pour mettre en œuvre un procédé de radiodiffusion de temps et de mesure d'une intégrité du temps radiodiffusé selon un mode de réalisation de l'invention.

L'invention porte également sur un programme d'ordinateur comprenant des instructions de code de programme pour l'exécution des étapes du procédé de radiodiffusion de temps et de mesure d'une intégrité du temps radiodiffusé selon un mode de réalisation de l'invention lorsque ledit programme est exécuté sur un ordinateur.

Enfin, l'invention porte sur un support d'enregistrement lisible par un ordinateur sur lequel est enregistré ce programme d'ordinateur.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 illustre la définition d'une zone de protection de l'information de décalage temporel, et d'une zone d'alerte autour d'un aéronef.

[Fig. 2] La figure 2 représente une configuration opérationnelle dans laquelle peut être mis en œuvre le procédé de radiodiffusion de temps et de mesure d'une intégrité du temps radiodiffusé selon l'invention.

[Fig. 3] La figure 3 représente schématiquement les étapes d'un procédé de radiodiffusion de temps et de mesure d'une intégrité du temps radiodiffusé selon un mode de réalisation de l'invention.

[Fig. 4] La figure 4 donne un exemple de courbe de fausse alarme et de courbe de non détection pour une variable de test telle que celle définie dans le procédé de radiodiffusion de temps et de mesure d'une intégrité du temps radiodiffusé selon l'invention.

**Description détaillée :**

L'invention s'applique au cas d'un réseau de balises terrestres de transfert de temps dont la position est connue, éventuellement de manière imparfaite. Ce cas d'application est fréquent lorsqu'il s'agit de déployer un réseau de manière provisoire sur un site en l'absence de service GNSS, ou dans le cas de réseaux dits « ad-hoc » (réseau sans fil décentralisé ne s'appuyant pas sur une architecture fixe de points d'accès). Dans ces réseaux, chaque nœud peut jouer le rôle de balise de transfert de temps, et contribue ainsi à la synchronisation des autres nœuds du réseau. Les nœuds pouvant être mobiles ou déplaçables, leur position n'est pas nécessairement connue de manière très précise. La précision de l'heure diffusée peut alors ne pas atteindre les niveaux d'exigence souhaités, en particulier lorsque les nœuds sont distants, même lorsque les balises de transfert de temps sont parfaitement synchronisées.

La figure 2 représente une configuration d'équipements dans laquelle un procédé de radiodiffusion de temps et de mesure d'une intégrité du temps radiodiffusé selon l'invention peut être mis en œuvre. Elle comprend un équipement de radiocommunications 201 cherchant à se synchroniser temporellement avec au moins quatre balises terrestres de transfert de temps 202 à 205 avec lesquelles il est en lien radio. Les balises terrestres de transfert de temps peuvent être mobiles ou fixes, et leurs positions connues de manière précise ou imparfaite.

En théorie, les balises doivent être synchronisées très précisément, par exemple en embarquant des horloges de haute précision comme des horloges atomiques ou en étant raccordées à un réseau filaire ou un réseau radio dédié implémentant un mécanisme de synchronisation précis. Cependant, le procédé selon l'invention prend en compte les éventuelles imprécisions sur les positions des balises. Il permet également de détecter un éventuel biais d'horloge ou de position des balises de transfert de temps et, sous réserve que le nombre de balises soit suffisant, de rejeter cette ou ces balises.

Par la suite, on considèrera que le réseau est plan, et que les inconnues portent uniquement sur des positions orthogonales x et y dans un plan horizontal, ce qui est une approximation généralement valable dans le cas de transfert de temps par des balises terrestres. Seules trois balises de transfert de temps sont alors nécessaires pour permettre à un équipement radio de récupérer une information de temps précise. Cependant, l'invention s'applique également en trois dimensions, en ajoutant la dimension z orthogonale à x et y, auquel cas un minimum de quatre stations est requis. L'ajout de stations de transfert de temps supplémentaires permet en outre d'améliorer la qualité de la détermination de l'heure, en lissant le bruit de mesure.

De manière à permettre la détection de la présence d'une balise dont la position ou l'horloge est biaisée, le procédé de radiodiffusion de temps et de mesure d'une intégrité du temps radiodiffusé selon l'invention nécessite au minimum une balise de transfert de temps supplémentaire, soit au moins 4 balises. Une balise supplémentaire, soit 5 balises de transfert de temps, permet d'identifier la balise de transfert de temps biaisée.

Le procédé radiodiffusion de temps et de mesure d'une intégrité du temps radiodiffusé selon l'invention consiste dans un premier temps à prendre en compte explicitement les positions des balises de transfert de temps dans un estimateur des moindres carrés afin d'estimer conjointement les positions des balises, la position du récepteur et son biais temporel par rapport au réseau de balises. Ensuite, les résultats de l'estimateur sont utilisés avec les mesures de pseudo-distance pour calculer une variable de test et la comparer avec un seuil d'alerte défini à partir d'un taux de fausse alarme spécifié. Lorsque le seuil n'est pas dépassé, il permet ensuite de calculer un rayon de protection associé au taux de fausse alarme et à une probabilité de détection ciblant spécifiquement le transfert de l'information de temps, puis de comparer ce rayon de protection avec un rayon d'alerte. Le rayon de protection est déterminé en quantifiant les biais minimums détectables sur la position ou l'horloge d'une ou plusieurs des balises de transfert de temps. Il permet donc :

-   de détecter une éventuelle incohérence des mesures de pseudo-distance, pour une probabilité de fausse alarme donnée, et avec une probabilité de détection d'une défaillance donnée ;

-   de rejeter les balises erronées (sous réserve de redondance suffisante des mesures),

-   de garantir un intervalle de sécurité, ou zone de confiance, TAL (sigle anglais pour *Time Alert Level,* ou niveau d'alerte temporel) de l'information de temps, au sein de laquelle l'absence de détection de défaillance est garantie à la probabilité de détection près.

Pour cela, le procédé selon l'invention identifie des défaillances susceptibles d'affecter le service de transfert de temps, construit les modèles de défaillance correspondants, puis met en œuvre un algorithme spécifique de contrôle d'intégrité adapté à la radiodiffusion d'une information de temps et aux modèles de défaillance identifiés.

Il suppose l'existence d'une forme d'onde radio adaptée au besoin de transfert de temps par radiodiffusion, c'est-à-dire la transmission par les balises d'un message horaire et d'un top horloge périodique, que le récepteur radio à synchroniser sait recevoir et mesurer précisément. Le message horaire contient l'instant d'émission du top horloge, défini selon le temps de référence du réseau de balises. La position de chaque balise (potentiellement imprécise) peut être transmise dans le message horaire, mémorisée dans le récepteur, ou transmise au récepteur par une liaison de données.

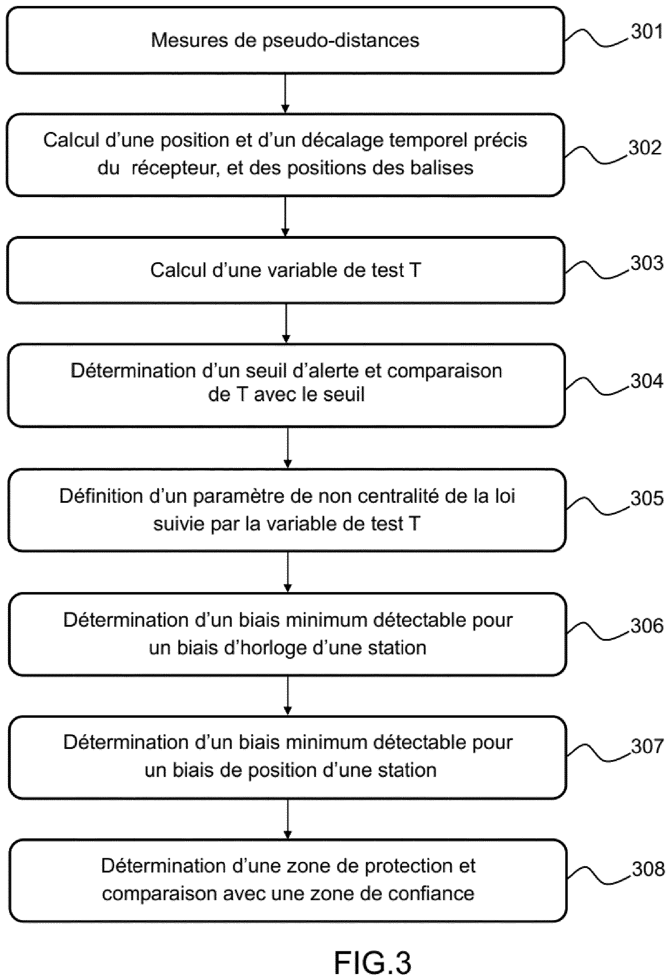

La figure 3 représente schématiquement les étapes d'un procédé de radiodiffusion de temps et de mesure d'une intégrité du temps radiodiffusé selon un mode de réalisation de l'invention. Il comprend les étapes suivantes :

- une étape 301 de mesures de pseudo-distances avec au moins quatre balises terrestres de transfert de temps, les positions des balises terrestres de transfert de temps étant connues par le récepteur ou transmises au récepteur, et de détermination d'une mesure de pseudo-distance $PD_i$ associée à chaque balise terrestre de transfert de temps,

- une étape 302 de mise en œuvre d'un algorithme de résolution optimisant un critère de maximum de vraisemblance utilisant les pseudo-distances $PD_i$ calculées à l'étape 301 et résolvant conjointement la position des balises terrestres de transfert de temps, la position du récepteur et le décalage temporel du récepteur par rapport aux balises terrestres de transfert de temps,

- une étape 303 de calcul d'une variable de test T égale à la somme du carré des résidus (vecteur de différences entre les mesures observées et les mesures prédites) des positions du récepteur et des balises terrestres de transfert de temps, pondérée par des variances des positions du récepteur et des balises terrestres de transfert de temps,

- une étape 304 de détermination d'un seuil d'alerte sur la variable T, en fonction d'une probabilité de fausse alarme donnée. Lorsque la variable T est supérieure ou égale au seuil d'alerte, une alerte de perte d'intégrité est levée, signifiant que l'une des balises est très probablement (relativement à la probabilité de fausse alarme) affectée par un biais d'horloge ou de position, et le procédé peut être stoppé à cette étape (pour le cycle considéré),

- une étape 305 de détermination d'un paramètre de non centralité $\lambda$ de de la loi du $\chi^2$ suivie par la variable de test T pour la probabilité de fausse alarme donnée et pour une probabilité de détection donnée,

- une étape 306 de détermination d'un biais minimum d'horloge détectable pour chaque balise terrestre de transfert de temps, à partir de la variable de test T et du paramètre de non centralité $\lambda$,

- une étape 307 de détermination d'un biais minimum de position détectable pour chaque balise terrestre de transfert de temps, à partir de la variable de test T et du paramètre de non centralité $\lambda$,

- une étape 308 de détermination d'une zone de protection de l'information de décalage temporel du récepteur calculée lors de la deuxième étape 302, à partir des biais minimum détectables calculés aux étapes 306 et 307, et de comparaison de la zone de protection avec une zone d'alerte pour déterminer si la mesure de décalage temporel du récepteur est intègre.

L'étape 301 est une étape habituelle pour l'homme du métier, qui consiste à détecter les tops de synchronisation dans les signaux transmis par les N balises terrestres de transfert de temps pour déterminer un instant d'arrivée du signal, et à les confronter avec leurs instants d'émission, transmis dans le message horaire contenu dans le signal, afin de calculer une différence de temps, et par conséquent une pseudo-distance entre le récepteur et les balises terrestres de transfert de temps avec lesquelles il est en lien radio.

Les mesures des instants d'arrivée des marquants horaires suivent une loi normale $\mathcal{N}(0, \sigma_t)$, avec $\sigma_t$ l'écart-type sur les mesures d'instants d'arrivée des signaux.

La pseudo-distance $PD_i$ mesurée entre la balise de transfert de temps i et le récepteur vaut $PD_i = c(TOA_i + \Delta t - Te_i + \varepsilon_i) = d_i + c. \Delta t + c.\varepsilon_i$, avec :

- $TOA_i$ l'heure d'arrivée du top de synchronisation dans le signal provenant de la balise i, mesuré par le récepteur à partir de son horloge locale,

- $Te_i$ l'heure d'émission par la balise du top de synchronisation, heure mesurée selon la référence temps du système de balises et transmise dans le message horaire,

- $\Delta t$ le biais de l'horloge du récepteur, soit la différence entre le temps du système de balises et le temps de l'horloge locale du récepteur,

- $\varepsilon_i$ un bruit blanc gaussien affectant la mesure i,

- c la vitesse de la lumière (vitesse de propagation du signal radio), et

- d$_i$ la distance entre la balise i et le récepteur.

L'étape 302 consiste à estimer simultanément la position du porteur, son biais d'horloge $\Delta t$ et la position de chaque balise terrestre de transfert de temps par un algorithme optimisant un critère de maximum de vraisemblance. Cette étape peut être mise en œuvre par exemple par un algorithme de Gauss-Newton, bien connu de l'homme du métier, ou par un algorithme de résolution des moindres carrés équivalent, comme par exemple un algorithme de Levenberg-Marquardt.

Pour une résolution par un algorithme de Gauss-Newton, l'étape 302 comprend la construction d'un vecteur d'état $X$ comprenant la position estimée $\hat{P}_r$ du récepteur, le biais d'horloge estimé $\widehat{\Delta t}$ et les positions estimées $\hat{P}_i$ des balises terrestres de transfert de temps, avec par exemple l'estimée $\hat{X}$ du vecteur $X$ construit comme suit :

$$\hat{X} = \begin{bmatrix} \hat{P}_r \\ c.\widehat{\Delta t} \\ \hat{P} \end{bmatrix} = \begin{bmatrix} \hat{P}_{xr} \\ \hat{P}_{yr} \\ c.\widehat{\Delta t} \\ \hat{P}_{x1} \\ \hat{P}_{y1} \\ \vdots \\ \hat{P}_{xN} \\ \hat{P}_{yN} \end{bmatrix},$$

Le vecteur $\hat{P}$ comprend l'ensemble des $\hat{P}_i$. Les indices x et y sont la décomposition des positions respectivement selon l'axe x ou l'axe y du plan orthonormé dans lequel sont faites les mesures.

Par la suite, on notera $A_i$ les positions des balises terrestres de transfert de temps connues ou transmises au récepteur, $P_i$ leurs positions exactes, et $A$ le vecteur comprenant l'ensemble des $A_i$, avec $A_i = P_i + \mu_i$, $\mu_i$ étant l'erreur de positionnement initiale de la balise terrestre de transfert de temps, et $PD$ le vecteur comprenant l'ensemble des pseudodistances $PD_i$.

L'étape 302 comprend également la construction d'un vecteur d'observation $y$ comprenant les positions $A_i$ des balises terrestres de transfert de temps et les pseudodistances, soit $y = \begin{bmatrix} A \\ PD \end{bmatrix}$, et de son pendant linéarisé Y comprenant l'écart entre les positions $A_i$ des balises terrestres de transfert de temps et les positions $\hat{P}_i$ estimées à l'itération précédente, et l'écart entre les pseudo-distances PD$_i$ et des pseudo-distances construites à partir des positions estimées $\hat{P}$ du récepteur et $\hat{P}_i$ des balises terrestres de transfert de temps, et du décalage temporel estimé $\widehat{\Delta t}$ entre le récepteur et les balises, soit

$$Y = \begin{bmatrix} A - \hat{P} \\ PD - \hat{d} - c.\widehat{\Delta t} \end{bmatrix} = \begin{bmatrix} A_{x1} - \hat{P}_{x1} \\ A_{y1} - \hat{P}_{y1} \\ \vdots \\ A_{xN} - \hat{P}_{xN} \\ A_{yN} - \hat{P}_{yN} \\ PD_1 - \widehat{d_1} - c.\widehat{\Delta t} \\ \vdots \\ PD_N - \widehat{d_N} - c.\widehat{\Delta t} \end{bmatrix}$$

avec $\hat{d}_i$ la distance entre la position estimée $\hat{P}$ du récepteur et la position estimée $\hat{P}_i$ de la balise terrestre de transfert de temps d'indice $i$, et $\hat{d}$ le vecteur construit à partir des $\hat{d}_i$. Lors de la première itération, les positions estimées $\hat{P}$ des balises terrestres de transfert de temps sont égales à leurs positions connues ou transmises au récepteur $A$, et le décalage temporel estimée $\widehat{\Delta t}$ est nul.

La solution du problème est obtenue en résolvant l'équation :

$$Y = HX + \varepsilon,$$

où $H$ est une matrice de résolution Jacobienne, et $\varepsilon$ est un bruit aléatoire centré lorsque les balises terrestres de transfert de temps ne sont pas entachées d'un biais d'horloge ou de position La matrice Jacobienne $H$ vaut :

$$H = \frac{\partial y}{\partial X} = \begin{bmatrix} \dfrac{\partial A}{\partial X} \\ \dfrac{\partial PD}{\partial X} \end{bmatrix}.$$

Par construction, $\dfrac{\partial A_{xi}}{\partial P_{xi}} = 1$ et $\dfrac{\partial A_{yi}}{\partial P_{yi}} = 1$. Par conséquent :

$$\frac{\partial A_{xi}}{\partial X} = \begin{bmatrix} 0 & 0 & ... & 0 & 1 & 0 & \cdots \end{bmatrix},$$

$$\frac{\partial A_{yi}}{\partial X} = \begin{bmatrix} 0 & 0 & \cdots & 0 & 0 & 1 & \cdots \end{bmatrix}.$$

Par construction toujours :

$$\frac{\partial PD_i}{\partial X} = \begin{bmatrix} -\dfrac{\widehat{P}_{yi} - \widehat{P}_y}{\widehat{d}_i} & -\dfrac{\widehat{P}_{xi} - \widehat{P}_x}{\widehat{d}_i} & 1 & 0 & 0 & \dfrac{\widehat{P}_{yi} - \widehat{P}_y}{\widehat{d}_i} & \dfrac{\widehat{P}_{xi} - \widehat{P}_x}{\widehat{d}_i} & 0 & 0 \end{bmatrix},$$

de sorte que :

$$H = \begin{bmatrix} 0 & 0 & 0 & 1 & 0 & 0 & 0 & 0 & 0 \\ \vdots & \vdots & \vdots & \vdots & \ddots & 0 & 0 & 0 & 0 \\ 0 & 0 & 0 & 0 & 0 & 1 & 0 & 0 & 0 \\ 0 & 0 & 0 & 0 & 0 & 0 & \ddots & 0 & 0 \\ 0 & 0 & 0 & 0 & 0 & 0 & 0 & 1 & 0 \\ 0 & 0 & 0 & 0 & 0 & 0 & 0 & 0 & 1 \\ -\dfrac{\widehat{P}_{y1} - \widehat{P}_y}{\widehat{d}_1} & -\dfrac{\widehat{P}_{x1} - \widehat{P}_x}{\widehat{d}_1} & 1 & \dfrac{\widehat{P}_{y1} - \widehat{P}_y}{\widehat{d}_1} & \dfrac{\widehat{P}_{x1} - \widehat{P}_x}{\widehat{d}_1} & 0 & 0 & 0 & 0 \\ \vdots & \vdots & \vdots & \vdots & \vdots & \ddots & \ddots & \vdots & \vdots \\ -\dfrac{\widehat{P}_{yN} - \widehat{P}_y}{\widehat{d}_N} & -\dfrac{\widehat{P}_{xN} - \widehat{P}_x}{\widehat{d}_N} & 1 & 0 & 0 & 0 & 0 & \dfrac{\widehat{P}_{yN} - \widehat{P}_y}{\widehat{d}_N} & \dfrac{\widehat{P}_{xN} - \widehat{P}_x}{\widehat{d}_N} \end{bmatrix}$$

Lors de la première itération de l'algorithme de résolution par l'optimisation d'un critère de maximum de vraisemblance, la matrice $H$ est calculée en prenant comme position $\widehat{P}$ du récepteur une estimation initiale de position obtenue par une méthode quelconque, comme par exemple de la multilatération sur les pseudo-distances $PD_i$ mesurées, ou plus avantageusement par une méthode d'estimation pseudo-linéaire reposant sur une forme clause mise en œuvre sur les pseudo-distances mesurées, c'est-à-dire une forme donnant directement la solution recherchée en l'absence de bruit. Les positions initiales des balises terrestres de transfert de temps utilisées sont les positions $A_i$, connues du récepteur ou qui lui ont été transmises. Lors des itérations suivantes, les valeurs de la matrice $Y$ et de la matrice $H$ sont recalculées à partir des valeurs contenues dans le vecteur d'état $\widehat{X}$ calculé lors de l'itération précédente de l'algorithme.

La matrice de covariance d'observation $\Gamma_e$ vaut :

$$\Gamma_e = \begin{bmatrix} \Gamma_\mu & 0 \\ 0 & \Gamma_\varepsilon \end{bmatrix},$$

où :

- $\Gamma_{\mu}$ est la matrice de covariance d'erreur sur la connaissance des positions des balises, avec $\Gamma_{\mu} = \sigma_p^2 I_{2N}$, où $\sigma_p$ est l'écart-type sur les mesures des coordonnées de position et $I_{2N}$ la matrice identité de taille 2N,

- $\Gamma_{\varepsilon}$ est la matrice de covariance des mesures de pseudo-distances PD$_i$, avec $\Gamma_{\varepsilon} = E(PD * PD^t) = c^2\sigma_t^2 I_N$.

Un estimateur efficace est l'estimateur du maximum de vraisemblance. Le bruit étant généralement supposé être un vecteur aléatoire gaussien centré, l'estimateur de maximum de vraisemblance coïncide alors avec l'estimateur des moindres carrés pondérés, et a pour expression :

$$\hat{X} = (H^t\Gamma_{\varepsilon}^{-1}H)^{-1}.H^t\Gamma_{\varepsilon}^{-1}Y = H^*Y.$$

La matrice $H^*$ vaut $H^* = (H^t\Gamma_{\varepsilon}^{-1}H)^{-1}H^t\Gamma_{\varepsilon}^{-1}$.

La matrice de covariance de l'estimateur $\Gamma_{\hat{X}}$ vaut :

$$\Gamma_{\hat{X}} = (H^t\Gamma_{\varepsilon}^{-1}H)^{-1}.$$

Les équations données ci-dessus sont formées à partir de matrices agencées selon une organisation donnée à titre d'illustration seulement. Les mêmes résultats peuvent être atteints en agençant les matrices de manière différente, par exemple en permutant leurs lignes, sans que cela n'affecte la précision des calculs et les résultats obtenus.

L'étape 302 du procédé selon l'invention réalise l'optimisation conjointe de la position du récepteur, de son biais d'horloge et des positions des balises terrestres de transfert de temps. Cette optimisation conjointe permet de prendre en compte une éventuelle imprécision sur la position des balises de transfert de temps lors du calcul du biais d'horloge du récepteur, de manière à calculer un décalage de temps $\widehat{\Delta t}$ du récepteur optimal, même lorsque la position des balises est peu précise. Cependant, ce résultat est biaisé dès lors que l'une des balises terrestres de transfert de temps souffre d'un biais de position ou d'un biais temporel, puisque l'estimateur est construit sur une hypothèse de bruit blanc gaussien centré et ne peut corriger des mesures dont le bruit est hors hypothèse, comme des mesures de position non centrées. En outre, les stations de transfert de temps sont considérées comme parfaitement synchronisées. C'est pourquoi le procédé selon l'invention vise, dans les étapes qui suivent, à déterminer une zone de protection de l'information de décalage temporel prenant en compte un éventuel biais de position ou d'horloge des balises terrestres de transfert de temps.

A cet effet, il comprend une troisième étape 303, lors de laquelle est calculée une variable de test T utilisée par la suite pour déterminer une zone de protection de l'information de décalage temporel autour du récepteur.

Cette variable T est construite comme égale à la somme du carré des résidus pondérés par les variances, c'est-à-dire le carré de la distance de Mahalanobis entre le vecteur mesure $Y$ et les mesures théoriques $H\hat{X}$ associées à l'état estimé $\hat{X}$, soit $T = \Delta Y^t.\Gamma_{\varepsilon}^{-1}.\Delta Y$ avec $\Delta Y$ la somme du carré des résidus, et $\Gamma_{\varepsilon}$ la matrice de covariance des mesures de pseudodistances.

La somme du carré des résidus (linéarisés) $\Delta Y$ vaut $\Delta Y = Y - H\hat{X} = Y - HH^*Y = (I - HH^*)Y$.

Ainsi, en posant $G = (I - HH^*)^t\Gamma_{\varepsilon}^{-1}(I - HH^*)$, on a $T = Y^tGY$.

Lorsque le système est juste déterminé, c'est-à-dire qu'il n'y a que trois balises de transfert de temps, la variable de test T est nécessairement égale à 0. Il n'est donc pas possible d'identifier la présence d'un biais sur une des balises.

Lorsque le système est surdéterminé, c'est-à-dire qu'il y a plus de trois balises de transfert de temps, la variable de test T suit une loi du $\chi^2$ (chi-2) à $K = N - 3$ degrés de liberté. On dit que $T \sim \chi^2(K)$.

Lorsque les mesures sont non biaisées, $\Delta Y$ est centré et la loi du $\chi^2$ est centrée.

Lorsque la position ou l'horloge d'une des balises terrestres de transfert de temps est biaisée, la loi du $\chi^2$ est décentrée. T suit alors une loi du $\chi^2$ d'ordre $K$ non centrée.

L'étape 304 du procédé selon l'invention consiste à déterminer un seuil d'alerte sur la variable T, en fonction d'une probabilité de fausse alarme donnée, et à lever une alerte de perte d'intégrité en cas de dépassement de ce seuil d'alerte.

Le calcul du seuil d'alerte se fait en observant la fonction de répartition de la variable de test T. Le seuil de décision $T_d$ pour la variable de test T est positionné par rapport à une probabilité de fausse alarme $P_{fa}$ de la fonction d'intégrité donnée, et vaut $s^2$, avec $s$ la valeur du seuil d'alerte sur la distance de Mahalanobis. Une valeur de T supérieur ou égale à $T_d$ déclenche une alerte de perte d'intégrité, et signifie généralement, c'est-à-dire selon le taux de fausse alarme spécifié, qu'une des balises terrestres de transfert de temps est affectée par un biais, et que le service de temps n'est pas intègre.

On a $F_{\chi^2}(s^2, K) = 1 - P_{fa}$, avec $F_{\chi^2}(s^2, K)$ la valeur au point $s^2$ de la fonction de répartition de la loi du $\chi^2$ d'ordre K centrée. Par conséquent :

$$s = \sqrt{F_{\chi^2}^{-1}\big(1 - P_{fa}, K\big)}.$$

Le seuil $s$ peut donc être déterminé facilement pour la probabilité de fausse alarme donnée, grâce à la fonction de répartition de la loi du $\chi^2$ centrée d'ordre K. S'agissant d'une valeur qui ne dépend pas des mesures de pseudo distances, il peut également être calculé en amont et stocké en mémoire.

Lorsque la variable T est supérieure ou égale au seuil s, une alerte est levée et le procédé peut être stoppé à cette étape (pour le cycle considéré) puisqu'au moins une des mesures faites auprès des balises terrestres de transfert de temps est probablement biaisée et que le service de temps n'est pas intègre.

Dans le cas contraire, le procédé comprend une cinquième étape 305 de détermination d'un paramètre de non centralité $\lambda$ de la variable de test T pour cette même probabilité de fausse alarme, et pour une probabilité de détection donnée. Cette étape comprend la détermination du paramètre de non centralité $\lambda$ de la loi du $\chi^2$ suivie par la variable de test T pour une probabilité de détection $P_d$ spécifiée et pour la probabilité de fausse alarme $P_{fa}$. Pour cela, on utilise la relation :

$$F_{\chi^2}(s^2, K, \lambda) = 1 - P_d$$

avec $F_{\chi^2}(s^2, K, \lambda)$ la fonction de répartition de la loi du $\chi^2$ d'ordre K décentrée d'un paramètre $\lambda$ au point $s^2$ (déterminé à l'étape précédente) et $P_d$ la probabilité de détection d'une défaillance spécifiée (biais sur les mesures de position ou d'horloge d'une des balises terrestres de transfert de temps).

Par conséquent, le paramètre de non centralité $\lambda$ pour une probabilité de fausse alarme donnée et à une probabilité de détection donnée vaut :

$$\lambda = F_{\chi^2}^{-1}(s^2, K, 1 - Pd).$$

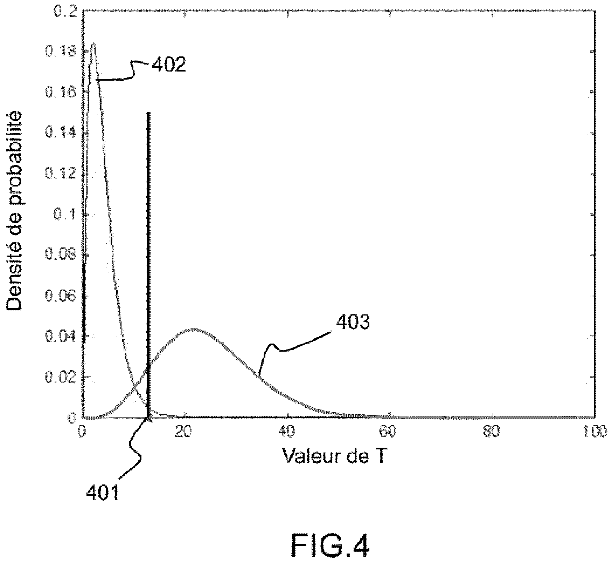

La figure 4 donne un exemple de positionnement du seuil $s^2$ 401 par rapport à une probabilité de fausse alarme 402 donnée, et représente la probabilité de détection 403 de la variable de test.

Par la suite, l'impact sur la variable de test T de deux types de biais sur les balises de transfert de temps sont envisagés et référencés par un indice j : un biais d'horloge ($j = 0$) et un biais de position ($j = 1$).

La sixième étape 306 du procédé selon l'invention consiste à déterminer le biais minimum d'horloge détectable pour chaque balise de transfert de temps, à partir de la variable de test T et du paramètre de non centralité $\lambda$, c'est-à-dire pour la probabilité de fausse alarme et la probabilité de détection données. Cette étape consiste à caractériser le biais minimum détectable $B_{min,i,j}$ dans le cas d'un biais « scalaire » correspondant à un biais d'horloge ($j = 0$) sur l'une des balises de transfert de temps.

Le biais $B_{i,j}$ d'horloge sur la balise terrestre de transfert de temps d'indice i (avec i variant entre 0 et N) et pour un modèle de biais scalaire ($j = 0$) se traduit sur la variable de test T par un décentrage de la loi du $\chi^2$ de paramètre de non centralité $\lambda_{i,j}$.

On a :

$$T\big(B_{i,0}\big) = B_{i,0}^{t}(I - HH^*)^{t}\Gamma_{\varepsilon}^{-1}(I - HH^*)B_{i,0} = B_{i,0}^{t}GB_{i,0}.$$

Le paramètre de non centralité étant défini par $\lambda$ et croissant en fonction du biais, on peut notamment déterminer le biais minimum détectable pour la défaillance et la ou les mesures considérées, en recherchant la solution de l'équation :

$$T\big(B_{min,i,j}\big) = \lambda.$$

Les défaillances étant caractérisées par des biais de la forme $B_{i,0} = b.W_i$ où b est un scalaire réel et $W_i$ est un vecteur binaire nul sauf à la position de la mesure de pseudo-distance relative à la balise de transfert de temps i considérée, on a :

$$B_{min,i,0} = \left( \sqrt{\frac{\lambda}{W_i^t G W_i}} \right).$$

Un biais $B_{i,0}$ se traduit par une erreur d'estimation $\Delta X_i$ du vecteur d'état $\hat{X}$. Lors d'une défaillance avec un biais inférieur à $B_{min,i,0}$, l'erreur maximale sur l'estimation du vecteur d'état a pour expression $\Delta X_{max,i,0} = H^*B_{min,i,0}$.

La septième étape 307 du procédé selon l'invention consiste à déterminer le biais minimum de position détectable pour chaque balise terrestre de transfert de temps, à partir de la variable de test T et du paramètre de non centralité $\lambda$, c'est-à-dire pour la probabilité de fausse alarme et la probabilité de détection données. Cette étape consiste à caractériser le biais minimum détectable $B_{min,i,j}$ dans le cas d'un biais de position 2D ($j = 1$) sur une balise terrestre de transfert de temps.

Le biais $B_{i,1}$ est la somme d'un biais sur l'abscisse et sur l'ordonnée de la position de la balise de transfert, de sorte que :

$$B_{i,1} = b_{x,i}.W_{x,i} + b_{y,i}.W_{y,i}$$

où $W_{x,i}$ (respectivement $W_{y,i}$) est un vecteur binaire nul sauf à la coordonnée x (respectivement y) de la position de la balise de transfert de temps $i$ considérée.

Le biais de position $B_{i,1}$ se traduit sur la variable de test T par un décentrage de la loi du $\chi^2$, de paramètre de non centralité $\lambda_{i,1}$. Une défaillance de la mesure de position de la balise de transfert de temps i présentant le plus petit biais détectable (c'est-à-dire de probabilité de détection Pd) vérifie :

$$T(B_{min,i,1}) = \lambda$$

avec

$$T(B_{i,1}) = B_{i,1}^t (I - HH^*)^t \Gamma_\varepsilon^{-1} (I - HH^*) B_{i,1} = B_{i,1}^t G B_{i,1}.$$

On en déduit deux valeurs possibles de $b_y$ en fonction de $b_x$ lorsque $T(B) = \lambda$ :

$$b_y = \frac{-G(x_i, y_i)b_x \pm \sqrt{G(x_i, y_i)^2 b_x^2 - G(y_i, y_i)(b_x^2 G(x_i, x_i) - \lambda)}}{G(y_i, y_i)}$$

avec $x_i$ et $y_i$ les coordonnées de la balise terrestre de transfert de temps d'indice $i$.

L'erreur $\Delta X$ associée au biais $B_{i,1}$ affectant le vecteur d'état $\hat{X}$ vaut :

$$\Delta X_{i,1} = H^* B_{i,1} = b_{xi,1} H^* W_{xi,1} + b_{yi,1} H^* W_{yi,1}$$

Le biais minimum détectable $B_{min,i,1} = (B_{minx,i,1}, B_{miny,i,1})$ pour la mesure $i$ dans le cas d'un biais de position 2D sur une balise de transfert de temps ($j = 1$) correspondant au biais d'estimation $r_i$ le plus grand peut donc être déterminé en recherchant le maximum de la fonction $r_i(b_x)$ pour $b_x$ variant entre 0 et $B_{MAXx,i,1}$, en considérant les deux solutions possibles pour $b_y$, avec

$$B_{MAXx,i,1} = \left( \sqrt{\frac{\lambda}{W_{xi,1}^t G W_{xi,1}}} \right) W_{xi,1}.$$

Il n'est pas nécessaire d'examiner les solutions négatives de $b_x$ car les maximums sont identiques pour les solutions opposées.

On a alors :

$$B_{min,x,i,1} = \text{argmax}\, r_i(b_x)$$

pour

$$0 \le b_x \le \left(\sqrt{\frac{\lambda}{W_{xi,1}^t G W_{xi,1}}}\right) W_{xi,1}$$

avec

$$r_i(b) = \left| b_x H^* W_{xi}[t] + b_y H^* W_{yi}[t] \right|$$

la notation V[t] désignant la composante temps d'un vecteur d'état V, et

$$B_{miny,i,1} = \frac{-G(x_i, y_i)B_{minx,i,1} \pm \sqrt{G(x_i, y_i)^2 B_{minx,i,1}^2 - G(y_i, y_i)\left(B_{minx,i,1}^2 G(x_i, x_i) - \lambda\right)}}{G(y_i, y_i)}.$$

La huitième étape 308 du procédé selon l'invention consiste à déterminer une zone de protection de l'information $\hat{\Delta}t$ de décalage temporel du récepteur calculée lors de la deuxième étape 302, à partir des biais minimum détectables calculés aux étapes 306 et 307, et à la comparer avec une zone d'alerte (ou zone de confiance).

Cette zone de protection associée au service de radiodiffusion de temps correspond à un cercle TPL (pour *Time Protection Level,* ou niveau de protection temporel) dont le rayon est égal au biais maximum non détectable sur l'estimation du vecteur d'état, associé à la $i^{ème}$ mesure et au $j^{ème}$ type de défaillance, c'est-à-dire :

$$TPL \approx max_{i,j}\left| H^* B_{min,i,j}[t] \right|$$

avec :

- dans le cas d'un biais d'horloge sur une balise de transfert de temps ($j = 0$)

$$B_{min,i,0} = \left(\sqrt{\frac{\lambda}{W_i^t G W_i}}\right) W_i, \text{pour i} = 1, \dots, N$$

- dans le cas d'un biais de position sur une balise de transfert de temps ($j = 1$)

$$B_{min,i,1} = max(B_{min,x,i,1} H^* W_{xi} + b1_{yi} H^* W_{yi}, b_{xi} H^* W_{xi} + b2_{yi} H^* W_{yi})$$

pour $i$ = 1, ... , $N,$ avec

$$b1_{y,i} = \frac{-G(xi,yi)B_{minx,i,1} - \sqrt{G(xi,yi)^2 B_{minx,i,1}^2 - G(yi,yi)\left(B_{minx,i,1}^2 G(xi,xi) - \lambda\right)}}{G(yi,yi)}$$

$$b2_{y,i} = \frac{-G(xi,yi)B_{minx,i,1} + \sqrt{G(xi,yi)^2 B_{minx,i,1}^2 - G(yi,yi)\left(B_{minx,i,1}^2 G(xi,xi) - \lambda\right)}}{G(yi,yi)}$$

En l'absence d'alerte à la quatrième étape 304 du procédé, la zone de protection TPL sur le service temps est alors garantie avec une probabilité $P_d$ donnée (c'est-à-dire un risque d'intégrité 1 - Pd) et une probabilité de fausse alarme $P_{fa}$ donnée tant que le rayon de protection temporel est inférieur à la borne d'alerte, c'est-à-dire tant que la zone de protection de l'information de décalage temporel est incluse dans la zone de confiance (TPL < TAL).

En revanche, le service temps n'est plus garanti dans les conditions d'intégrité définies lorsque :

- une alerte est déclenchée, c'est-à-dire lorsque T > Td (cinquième étape du procédé), et/ou

- TPL $\geq$ TAL.

Le procédé de radiodiffusion de temps et de mesure d'une intégrité du temps radiodiffusé décrit précédemment permet de détecter la présence d'un biais de position ou de synchronisation sur l'une des balises terrestres de transfert de temps. Lorsque le nombre de balises est supérieur ou égal à 5, il permet également de déterminer et de rejeter la balise biaisée.

Pour cela, lorsque la variable de test T dépasse le seuil d'alerte Td (quatrième étape 304 du procédé selon l'invention) ou que la zone de protection (ou zone d'intégrité) TPL définie à la huitième étape 308 du procédé selon l'invention est supérieure ou égale à la zone d'alerte (ou zone de confiance) TAL, le procédé est réitéré N fois en considérant à chaque fois les signaux provenant d'un groupe de $N$ - 1 balises différentes. Un seul de ces tests aboutira à la fois à une absence d'alerte sur la variable de test et sur la définition d'une zone de protection inférieure à la zone d'alerte, ce qui permet d'identifier directement la balise de transfert de temps biaisée. Cette balise peut ensuite être exclue de la mise en œuvre du procédé de transfert de temps selon l'invention, ce qui permet d'assurer le service temps avec une meilleure précision.

Le même principe peut être étendu à la détermination d'ensembles de M balises terrestres de transfert de temps affectées par un biais de position ou de temps, en mettant en œuvre le procédé sur des groupes de balises de manière à exclure successivement chaque ensemble de M balises possible, dès lors que $N$ - $M$ est supérieur ou égal à 4.

L'invention porte donc sur un procédé de radiodiffusion de temps et de mesure d'une intégrité du temps radiodiffusé pour un terminal en réception radiofréquence avec au moins quatre balises terrestres de transfert de temps synchronisées diffusant chacune un message horaire comprenant un marquant horaire et une heure d'émission, mais également sur le terminal lui-même.

Un tel terminal doit disposer d'une chaîne radio lui permettant de recevoir et d'interpréter le message horaire diffusé par les balises pour déterminer un instant d'arrivée de marquants horaires, et de moyens de calculs lui permettant de mettre en œuvre le procédé, comme par exemple un microprocesseur, un DSP (sigle anglais pour *Digital Signal Processor,* ou processeur de signal numérique), un FPGA (sigle anglais pour *Field Programmable Gate Array,* ou réseau de portes programmable), un ASIC (acronyme anglais pour *Application-Specific Integrated Circuit,* ou circuit intégré propre à une application), n'importe quelle association de ces moyens, ou n'importe quel composant matériel permettant d'exécuter les fonctions précitées.

Enfin, il porte sur un programme d'ordinateur comprenant des instructions de code de programme pour l'exécution des étapes du procédé de radiodiffusion de temps et de mesure d'une intégrité du temps radiodiffusé selon l'invention lorsque ledit programme est exécuté sur un ordinateur, ainsi que sur un support d'enregistrement lisible par un ordinateur sur lequel est enregistré un tel programme d'ordinateur.

## Revendications

1. Procédé de radiodiffusion de temps et de mesure d'une intégrité du temps radiodiffusé pour un récepteur (101) en lien radiofréquence avec au moins quatre balises terrestres de transfert de temps (102, 103, 104) synchronisées diffusant chacune un message horaire comprenant un marquant horaire et une heure d'émission, le procédé de radiodiffusion de temps et de mesure d'une intégrité du temps radiodiffusé étant **caractérisé en ce qu'**il comprend :

   - une première étape (301) de calcul d'un instant d'arrivée des messages horaires transmis par lesdites balises terrestres de transfert de temps, les positions desdites balises terrestres de transfert de temps étant connues par le récepteur ou transmises au récepteur, et de détermination d'une mesure de pseudo-distance associée à chaque balise terrestre de transfert de temps,
   - une deuxième étape (302) de mise en œuvre d'un algorithme de résolution optimisant un critère de maximum de vraisemblance utilisant les pseudo-distances calculées à la première étape (301) et résolvant conjointement les positions des balises terrestres de transfert de temps, la position du récepteur et le décalage temporel du récepteur,
   - une troisième étape (303) de calcul d'une variable de test T égale à la somme du carré des résidus des positions du récepteur et des balises terrestres de transfert de temps, pondérée par des variances des positions du récepteur et des balises terrestres de transfert de temps,

- une quatrième étape (304) de détermination d'un seuil d'alerte sur la variable de test T en fonction d'une probabilité de fausse alarme Pfa donnée, et lorsque la variable de test T est supérieur ou égale audit seuil d'alerte, de levée d'une alerte de perte d'intégrité, et sinon
- une cinquième étape (305) de détermination d'un paramètre de non centralité $\lambda$ de la variable de test T pour ladite probabilité de fausse alarme Pfa et pour une probabilité de détection Pd donnée,
- une sixième étape (306) de détermination d'un biais minimum d'horloge détectable pour chaque balise terrestre de transfert de temps, à partir de la variable de test T et du paramètre de non centralité $\lambda$,
- une septième étape (307) de détermination d'un biais minimum de position détectable pour chaque balise terrestre de transfert de temps, à partir de la variable de test T et du paramètre de non centralité $\lambda$,
- une huitième étape (308) de détermination d'une zone de protection de l'information de décalage temporel du récepteur calculée lors de la deuxième étape (302), à partir des biais minimum détectables calculés lors de la sixième étape (306) et de la septième étape (307) du procédé, et de levée d'une alerte de perte d'intégrité lorsque ladite zone de protection est supérieure ou égale à une zone d'alerte.

2. Procédé de radiodiffusion de temps et de mesure d'une intégrité du temps radiodiffusé selon la revendication 1, dans lequel l'algorithme utilisant un critère de maximum de vraisemblance mis en œuvre lors de la deuxième étape (302) est un algorithme de Gauss-Newton ou un algorithme de Levenberg-Marquardt.

3. Procédé de radiodiffusion de temps et de mesure d'une intégrité du temps radiodiffusé selon l'une des revendications précédentes, dans lequel la deuxième étape (302) comprend :

- la construction d'un vecteur d'état $X$ comprenant une position estimée du récepteur, un décalage temporel estimé du récepteur, et des positions estimées desdites balises terrestres de transfert de temps,
- la construction d'un vecteur d'observation $y$ comprenant les positions connues ou transmises desdites balises terrestres de transfert de temps et les pseudo-distances calculées lors de la première étape (301), la construction d'un vecteur d'observation linéarisé $Y$ comprenant un écart entre les positions connues ou transmises desdites au moins trois balises terrestres de transfert de temps et leurs positions estimées, et un écart entre les pseudo-distances calculées lors de la première étape (301) et des pseudo-distances construites à partir des valeurs du vecteur d'état $X$,
- la construction d'une matrice Jacobienne $H$ à partir du vecteur d'état $X$ et du vecteur d'observation $y$ tel que

$$H = \frac{\partial y}{\partial X}$$ , et la résolution itérative du système, en calculant $\hat{X} = H^*Y$.

4. Procédé de radiodiffusion de temps et de mesure d'une intégrité du temps radiodiffusé selon l'une des revendications précédentes, dans laquelle la variable de test T calculée lors de la troisième étape (303) suit une loi mathématique du $\chi^2$.

5. Procédé de radiodiffusion de temps et de mesure d'une intégrité du temps radiodiffusé selon l'une des revendications précédentes, dans lequel la huitième étape (308) de détermination d'une zone de protection de l'information de décalage temporel comprend le calcul d'une erreur d'estimation maximum non détectable avec une probabilité supérieure ou égale à la probabilité de détection Pd d'un biais d'horloge ou de position d'une ou plusieurs des balises terrestres de transfert de temps.

6. Procédé de radiodiffusion de temps et de mesure d'une intégrité du temps radiodiffusé selon l'une des revendications précédentes, dans lequel le récepteur (101) est en lien radiofréquence avec N balises terrestres de transfert de temps synchronisées diffusant chacune un message horaire comprenant un marquant horaire et une heure d'émission, avec N supérieur ou égal à 5, et où lorsqu'une alerte de perte d'intégrité est levée lors de la quatrième étape (304) ou lors de la huitième étape (308), le procédé est remis en œuvre successivement sur chaque sous-ensemble de balises terrestres de transfert de temps de taille $N - M$, avec $1 \leq M \leq N - 4$, de manière à déterminer un sous-ensemble de balises terrestres de transfert de temps ne levant pas d'alerte de perte d'intégrité afin d'identifier la ou les stations de transfert de temps affectées par un biais d'horloge ou un biais de position.

7. Equipement de radiocommunications (101) en lien radiofréquence avec au moins quatre balises terrestres de transfert de temps (102, 103, 104) synchronisées diffusant chacune un message horaire comprenant un marquant horaire et une heure d'émission, l'équipement de radiocommunications comprenant une chaîne radio configurée pour recevoir et interpréter le message horaire transmis par les balises terrestres de transfert de temps, l'équipement de radiocommunications étant **caractérisé en ce qu'**il comprend en outre des moyens de calculs configurés pour mettre en œuvre un procédé de radiodiffusion de temps et de mesure d'une intégrité du temps radiodiffusé selon l'une des revendications précédentes.

8. Programme d'ordinateur comprenant des instructions de code de programme pour l'exécution des étapes du procédé de radiodiffusion de temps et de mesure d'une intégrité du temps radiodiffusé selon l'une des revendications 1 à 6 lorsque ledit programme est exécuté sur un ordinateur.

9. Support d'enregistrement lisible par un ordinateur sur lequel est enregistré un programme d'ordinateur selon la revendication 8.

**Patentansprüche**

1. Verfahren zum Zeitübertragen und zum Messen der Integrität der für einen Empfänger (101) über eine Funkfrequenzverbindung übertragenen Zeit mit mindestens vier synchronisierten terrestrischen Zeitübertragungsbaken (102, 103, 104), die jeweils eine Zeitnachricht senden, die einen Zeitstempel und eine Sendezeit umfasst, wobei das Verfahren zum Zeitübertragen und zum Messen der Integrität der per Funk übertragenen Zeit **dadurch gekennzeichnet ist, dass** es Folgendes umfasst:

   - einen ersten Schritt (301) zum Berechnen eines Ankunftszeitpunkts der Zeitnachrichten, die von den terrestrischen Zeitübertragungsbaken übertragen werden, wobei die Positionen der terrestrischen Zeitübertragungsbaken dem Empfänger bekannt sind oder an den Empfänger übertragen werden, und zum Bestimmen einer Messung des Pseudoabstands, die jeder terrestrischen Zeitübertragungsbake zugeordnet ist,
   - einen zweiten Schritt (302) zum Ausführen eines Resolutionsalgorithmus, der ein Kriterium der maximalen Wahrscheinlichkeit unter Verwendung der im ersten Schritt (301) berechneten Pseudoabstände optimiert und gemeinsam die Positionen der terrestrischen Zeitübertragungsbaken, die Position des Empfängers und die Zeitverschiebung des Empfängers auflöst,
   - einen dritten Schritt (303) zum Berechnen einer Testvariablen T gleich der Quadratsumme der übrigen Positionen des Empfängers und der terrestrischen Zeitübertragungsbaken, gewichtet durch Varianzen der Positionen des Empfängers und der terrestrischen Zeitübertragungsbaken,
   - einen vierten Schritt (304) zum Bestimmen einer Warnschwelle auf der Testvariablen T als Funktion einer gegebenen Wahrscheinlichkeit für einen Fehlalarm Pfa, und wenn die Testvariable T größer oder gleich der Warnschwelle ist, zum Auslösen einer Warnung vor dem Verlust der Integrität, und anderenfalls
   - einen fünften Schritt (305) zum Bestimmen eines Nichtzentralitätsparameters $\lambda$ der Testvariablen T für die Wahrscheinlichkeit eines Fehlalarms Pfa und für eine gegebene Wahrscheinlichkeit der Erkennung Pd,
   - einen sechsten Schritt (306) zum Bestimmen eines systematischen Mindestzeitfehlers, der für jede terrestrische Zeitübertragungsbake erkennbar ist, anhand der Testvariablen T und des Nichtzentralitätsparameters $\lambda$,
   - einen siebten Schritt (307) zum Bestimmen eines systematischen Mindestpositionsfehlers, der für jede terrestrische Zeitübertragungsbake erkennbar ist, anhand der Testvariablen T und des Nichtzentralitätsparame-ters $\lambda$,
   - einen achten Schritt (308) zum Bestimmen einer Schutzzone der während des zweiten Schritts (302) berechneten Informationen der Zeitverschiebung des Empfängers anhand der erkennbaren, während des sechsten Schritts (306) und des siebten Schritts (307) des Verfahrens berechneten systematischen Mindestfehler und zum Auslösen einer Warnung vor dem Verlust der Integrität, wenn die Schutzzone größer oder gleich einer Warnzone ist.

2. Verfahren zum Zeitübertragen und zum Messen der Integrität der per Funk übertragenen Zeit nach Anspruch 1, wobei der Algorithmus, der ein Kriterium der maximalen Wahrscheinlichkeit verwendet, der während des zweiten Schritts (302) ausgeführt wurde, ein Gauss-Newton-Algorithmus oder ein Levenberg-Marquardt-Algorithmus ist.

3. Verfahren zum Zeitübertragen und zum Messen der Integrität der per Funk übertragenen Zeit nach einem der vorhergehenden Ansprüche, wobei der zweite Schritt (302) Folgendes umfasst:

   - das Erstellen eines Zustandsvektors X, umfassend eine geschätzte Position des Empfängers, eine geschätzte Zeitverschiebung des Empfängers und geschätzte Positionen der terrestrischen Zeitübertragungsbaken,
   - das Erstellen eines Beobachtungsvektors *y,* umfassend die bekannten oder übertragenen Positionen der terrestrischen Zeitübertragungsbaken und die Pseudoabstände, die während des ersten Schritts (301) berechnet wurden, wobei das Erstellen eines linearisierten Beobachtungsvektors *Y* einen Unterschied zwischen den bekannten oder übertragenen Positionen der mindestens drei terrestrischen Zeitübertragungsbaken und ihren geschätzten Positionen und einen Unterschied zwischen den während des ersten Schritts (301) berechneten Pseudoabständen und den anhand der Werte des Zustandsvektors X erstellten Pseudoabständen umfasst, - das Erstellen einer Jacobi-Matrix *H* anhand des Zustandsvektors *X* und des Beobachtungsvektors *y,* wie

$$H = \frac{\partial y}{\partial x\prime},$$ und die iterative Resolution des Systems durch Berechnung von $\hat{X} = H * Y.$

4. Verfahren zum Zeitübertragen und zum Messen der Integrität der per Funk übertragenen Zeit nach einem der vorhergehenden Ansprüche, wobei die während des dritten Schritts (303) berechnete Testvariable T einem mathematischen Gesetz von $\chi^2$ folgt.

5. Verfahren zum Zeitübertragen und zum Messen der Integrität der per Funk übertragenen Zeit nach einem der vorhergehenden Ansprüche, wobei der achte Schritt (308) zum Bestimmen einer Schutzzone der Informationen der Zeitverschiebung das Berechnen eines maximalen, nicht erkennbaren Schätzfehlers mit einer Wahrscheinlichkeit größer oder gleich der Wahrscheinlichkeit der Erkennung Pd eines systematischen Zeitfehlers oder der Position einer oder mehrerer terrestrischer Zeitübertragungsbaken umfasst.

6. Verfahren zum Zeitübertragen und zum Messen der Integrität der per Funk übertragenen Zeit nach einem der vorhergehenden Ansprüche, wobei der Empfänger (101) in Funkfrequenzverbindung mit N synchronisierten terrestrischen Zeitübertragungsbaken steht, die jeweils eine Zeitnachricht senden, die einen Zeitstempel und eine Sendezeit umfasst, wobei N größer oder gleich 5 ist, und wobei, wenn eine Warnung vor dem Verlust der Integrität während des vierten Schritts (304) oder während des achten Schritts (308) ausgelöst wird, das Verfahren nacheinander bei jeder Untergruppe von terrestrischen Zeitübertragungsbaken der Größe *N-M* erneut ausgeführt wird, wobei *1 ≤ M ≤ N - 4,* um eine Untergruppe von terrestrischen Zeitübertragungsbaken zu bestimmen, die keine Warnung vor dem Verlust der Integrität auslösen, um die Zeitübertragungsstation(en) zu identifizieren, die von einem systematischen Zeitfehler oder einem systematischen Positionsfehler betroffen sind.

7. Funkausrüstung (101) in Funkfrequenzverbindung mit mindestens vier synchronisierten terrestrischen Zeitübertragungsbaken (102, 103, 104), die jeweils eine Zeitnachricht senden, die einen Zeitstempel und eine Sendezeit umfasst, wobei die Funkausrüstung eine Funkkette umfasst, die dafür konfiguriert ist, die von den terrestrischen Zeitübertragungsbaken übertragene Zeitnachricht zu empfangen und zu interpretieren, wobei die Funkausrüstung **dadurch gekennzeichnet ist, dass** sie des Weiteren Rechenmittel umfasst, die dafür konfiguriert sind, ein Zeit- und Messrundfunkverfahren einer Integrität der per Funk übertragenen Zeit nach einem der vorhergehenden Ansprüche auszuführen.

8. Computerprogramm, umfassend Programmcodebefehle zur Ausführung der Schritte des Zeit- und Messrundfunkverfahrens einer Integrität der per Funk übertragenen Zeit nach einem der Ansprüche 1 bis 6, wenn das Programm auf einem Computer ausgeführt wird.

9. Speichermedium, das von einem Computer lesbar ist, auf dem ein Computerprogramm nach Anspruch 8 gespeichert ist.

## Claims

1. A method for broadcasting time and for measuring the integrity of the broadcast time for a receiver (101) communicating over radiofrequencies with at least four synchronised terrestrial time transfer beacons (102, 103, 104) each broadcasting a time message comprising a time marker and a transmission time, the method for broadcasting time and for measuring the integrity of the broadcast time being **characterised in that** it comprises:

   - a first step (301) of computing a time of arrival of the time messages transmitted by said terrestrial time transfer beacons, with the positions of said terrestrial time transfer beacons being known by the receiver or being transmitted to the receiver, and of determining a pseudo-distance measurement associated with each time transfer terrestrial beacon;
   - a second step (302) of implementing a resolution algorithm optimising a maximum likelihood criterion using the pseudo-distances computed in the first step (301) and jointly resolving the positions of the terrestrial time transfer beacons, the position of the receiver and the time shift of the receiver;

- a third step (303) of computing a test variable T equal to the sum of the square of the remainders of the positions of the receiver and of the terrestrial time transfer beacons, weighted by variances in the positions of the receiver and of the terrestrial time transfer beacons;

- a fourth step (304) of determining an alert threshold on the test variable T according to a given false alarm probability Pfa, and, when the test variable T is greater than or equal to said alert threshold, issuing a loss of integrity warning; and otherwise

- a fifth step (305) of determining a non-centrality parameter $\lambda$ of the test variable T for said false alarm probability Pfa and for a given detection probability Pd;

- a sixth step (306) of determining a minimum detectable clock bias for each time transfer terrestrial beacon based on the test variable T and the non-centrality parameter $\lambda$;

- a seventh step (307) of determining a minimum detectable position bias for each time transfer terrestrial beacon based on the test variable T and the non-centrality parameter $\lambda$;

- an eighth step (308) of determining a protection area for the time shift information of the receiver computed during the second step (302) based on the detectable minimum biases computed during the sixth step (306) and the seventh step (307) of the method, and of issuing a loss of integrity warning when said protection area is greater than or equal to a warning area.

2. The method for broadcasting time and for measuring the integrity of the broadcast time according to claim 1, wherein the algorithm using a maximum likelihood criterion implemented during the second step (302) is a Gauss-Newton algorithm or a Levenberg-Marquardt algorithm.

3. The method for broadcasting time and for measuring the integrity of the broadcast time according to any of the preceding claims, wherein the second step (302) comprises:

- constructing a state vector $X$ comprising an estimated position of the receiver, an estimated time shift of the receiver, and estimated positions of said terrestrial time transfer beacons;

- constructing an observation vector $y$ comprising the known or transmitted positions of said terrestrial time transfer beacons and the pseudo-distances computed during the first step (301), constructing a linearised observation vector $Y$ comprising a deviation between the known or transmitted positions of said at least three terrestrial time transfer beacons and their estimated positions, and a deviation between the pseudo-distances computed during the first step (301) and the pseudo-distances constructed from the values of the state vector $X$;

- constructing a Jacobian matrix $H$ based on the state vector $X$ and on the observation vector $y$, such that $H = \dfrac{\partial y}{\partial X}$, and iteratively resolving the system by computing $\hat{X} = H^*Y$.

4. The method for broadcasting time and for measuring the integrity of the broadcast time according to any of the preceding claims, wherein the test variable T computed during the third step (303) follows a mathematical law of $\chi^2$.

5. The method for broadcasting time and for measuring the integrity of the broadcast time according to any of the preceding claims, wherein the eighth step (308) of determining a protection area for the time shift information comprises computing an undetectable maximum estimation error with a probability that is greater than or equal to the probability Pd of detecting a clock or a position bias of one or more of the terrestrial time transfer beacons.

6. The method for broadcasting time and for measuring the integrity of the broadcast time according to any of the preceding claims, wherein the receiver (101) communicates over radiofrequencies with N synchronised terrestrial time transfer beacons each broadcasting a time message comprising a time marker and a transmission time, with N being greater than or equal to 5, and wherein, when a loss of integrity warning is issued during the fourth step (304) or during the eighth step (308), the method is successively reimplemented on each subset of terrestrial time transfer beacons of size N-M, with $1 \leq M \leq N-4$, so as to determine a subset of terrestrial time transfer beacons not issuing a loss of integrity warning in order to identify the one or more time transfer stations affected by a clock bias or a position bias.

7. Radiocommunication equipment (101) communicating over radiofrequencies with at least four synchronised terrestrial time transfer beacons (102, 103, 104) each broadcasting a time message comprising a time marker and a transmission time, the radio communication equipment comprising a radio chain configured to receive and interpret the time message transmitted by the terrestrial time transfer beacons, the radio communication equipment being **characterised in that** it further comprises computation means configured to implement a method for broadcasting time and for measuring the integrity of the broadcast time according to any of the preceding claims.

8. A computer program comprising program code instructions for executing the steps of the method for broadcasting time and for measuring the integrity of the broadcast time according to any of claims 1 to 6 when said program is executed on a computer.

9. A computer-readable storage medium storing a computer program according to claim 8.

FIG.1

FIG.2

```
┌─────────────────────────────────────────────┐
│         Mesures de pseudo-distances          │──── 301
└─────────────────────────────────────────────┘
                      │
                      ▼
┌─────────────────────────────────────────────┐
│  Calcul d'une position et d'un décalage      │──── 302
│  temporel précis du récepteur, et des        │
│  positions des balises                       │
└─────────────────────────────────────────────┘
                      │
                      ▼
┌─────────────────────────────────────────────┐
│         Calcul d'une variable de test T      │──── 303
└─────────────────────────────────────────────┘
                      │
                      ▼
┌─────────────────────────────────────────────┐
│  Détermination d'un seuil d'alerte et        │──── 304
│  comparaison de T avec le seuil              │
└─────────────────────────────────────────────┘
                      │
                      ▼
┌─────────────────────────────────────────────┐
│  Définition d'un paramètre de non            │──── 305
│  centralité de la loi suivie par la          │
│  variable de test T                          │
└─────────────────────────────────────────────┘
                      │
                      ▼
┌─────────────────────────────────────────────┐
│  Détermination d'un biais minimum            │──── 306
│  détectable pour un biais d'horloge          │
│  d'une station                               │
└─────────────────────────────────────────────┘
                      │
                      ▼
┌─────────────────────────────────────────────┐
│  Détermination d'un biais minimum            │──── 307
│  détectable pour un biais de position        │
│  d'une station                               │
└─────────────────────────────────────────────┘
                      │
                      ▼
┌─────────────────────────────────────────────┐
│  Détermination d'une zone de protection et   │──── 308
│  comparaison avec une zone de confiance      │
└─────────────────────────────────────────────┘
```

FIG.3

FIG.4

**RÉFÉRENCES CITÉES DANS LA DESCRIPTION**

**Documents brevets cités dans la description**

- FR 3114164